# EUROPÄISCHE PATENTSCHRIFT

(11) **EP 0 895 089 B1**
(45) Veröffentlichungstag und Bekanntmachung des Hinweises auf die Patenterteilung: **08.10.2003**
(21) Anmeldenummer: 98113736.7
(22) Anmeldetag: 23.07.1998
(51) Int. Cl.: G01P 3/48

(54) **Einrichtung zur Bestimmung der Drehzahl einer Brennkraftmaschine**
Device for determining the rotational speed of a combustion engine
Dispositif pour déterminer la vitesse de rotation d'un moteur à combustion interne

(30) Priorität: 25.07.1997 DE 19732088
(43) Veröffentlichungstag der Anmeldung: 03.02.1999
(73) Patentinhaber: ROBERT BOSCH GMBH, 70442 Stuttgart (DE)
(72) Erfinder: Kutteruf, Karl-Martin, 73272 Neidlingen (DE); Lehmann, Siegfried, 73061 Ebersbach (DE)

(56) Entgegenhaltungen:
- EP-A- 0 408 877
- EP-A- 0 472 877
- EP-A- 0 780 689
- DE-A- 3 400 787

## Beschreibung

### Stand der Technik

Die Erfindung geht aus von einer Einrichtung zur Bestimmung der Drehzahl einer Brennkraftmaschine mit einer signalverarbeitenden Anordnung, der im Oberbegriff des Anspruchs 1 definierten Gattung.

Aus der EP 0 472 877 B1 ist eine Vorrichtung zur Drehzahlermittlung einer in einem Kraftfahrzeug angeordneten Brennkraftmaschine, die mit einer elektrischen Zündanlage gezündet wird, mit einer signalverarbeitenden Anordnung bekannt. Die signalverarbeitende Anordnung erfaßt im Betrieb die auf ein einen Drehstromgenerator enthaltendes Bordnetz eingekoppelten, den Zündimpulsen entsprechenden Signalanteilen, umfaßt eine Eingabeeinheit, über welche die Anzahl der Zündimpulse pro Umdrehung der Brennkraftmaschine eingegeben wird und ermittelt im Betrieb die Generatorfrequenz der vom Drehstromgenerator auf dem Bordnetz verursachten Restwelligkeit. Aus der ermittelten Generatorfrequenz, den den Zündimpulsen entsprechenden Signalanteilen und der eingegebenen Anzahl von Zündimpulsen pro Umdrehung der Brennkraftmaschine wird das Übersetzungsverhältnis zwischen der Generatorfrequenz und der Drehzahl der Brennkraftmaschine ermittelt. Aus der mit dem so ermittelten Übersetzungsverhältnis bewerteten Generatorfrequenz wird die Drehzahl berechnet. Bei dieser nur einen Sensor benötigenden Vorrichtung ergeben sich unter gewissen betrieblichen Bedingungen gelegentlich Unsicherheiten in der Detektionssicherheit.

Aus der EP 0 408 877 A2 ist zur Drehzahlermittlung einer Brennkraftmaschine, sei es ein Otto- oder auch ein Dieselmotor, die einen von ihr angetriebenen Generator enthält, ein Verfahren bekannt, bei dem mit einer signalverarbeitenden Anordnung aus dem am Generator bzw. der Last anliegenden Signal, welches einen Signalanteil höherer und einen niedrigerer Frequenz enthält, die Drehzahl ermittelt wird. Dabei wird aus beiden Signalanteilen zusammen das Übersetzungsverhältnis des Antriebs zwischen Brennkraftmaschine und Generator ermittelt. Dieses Übersetzungsverhältnis geht, ebenso wie die Zylinderzahl der Brennkraftmaschine, in die Berechnung der Drehzahl aus dem höherfrequenten Signalanteil ein. Aus dem niederfrequenten Signalanteil wird durch Frequenz-Demodulation der Arbeitstakt und aus diesem bei bekannter Zylinderzahl die Drehzahl der Brennkraftmaschine ermittelt. Dieses Ergebnis wird zur Ermittlung des genannten Übersetzungsverhältnisses verwendet.

Bei diesem bekannten Verfahren werden zur Ermittlung der Drehzahl jeweils frequenzmodulierte Signalanteile der Generatorfrequenz ausgewertet. In der Praxis hat sich herausgestellt, daß dieses Verfahren insbesondere bei Dieselmotoren sehr zuverlässig arbeitet. Bei der Anwendung für Ottomotoren hat sich als nachteilig herausgestellt, daß die Modulation des niederfrequenten Signalanteils, aus dem der Arbeitszyklus der Brennkraftmaschine ermittelt wird, wesentlich schwächer ausgeprägt ist.

Weiterhin ist aus der EP-A O 701 134 ein Verfahren zur Ermittlung der Drehzahl eines Verbrennungsmotors bekannt, bei dem die Drehzahl zum einem aus der von einem Generator erzeugten Bordnetzspannung und zum anderen in dem unteren Drehzahlbereich aus der vom Verbrennungsmotor erzeugten Schwingung oder dem von ihrem Auspuff erzeugten Geräusch ermittelt wird. Das Geräusch wird über ein Mikrophon abgenommen, welches in der Nähe des Auspuffs angebracht werden muß. Die Schwingung wird über einen Beschleunigungsmesser abgenommen, der am Motor angebracht ist. Die aus der Frequenz des akustischen Geräuschs oder der Motorschwingung festgestellten Werte und die daraus errechneten Drehzahlwerte dienen der Kalibrierung der aus der Bordnetzspannung gewonnenen Drehzahl. Es wird daraus eine Konstante ermittelt, welche das Verhältnis zwischen der Frequenz der Generatorspannung und der akustischen bzw. mechanischen Frequenz angibt. Diese Konstante dient mit der Auswertung der Generatorfrequenz der eigentlichen Drehzahlangabe. Es ist klar, daß bei diesem bekannten Verfahren durch die Notwendigkeit der Bereitstellung von akustischem oder mechanisch schwingendem Signal ein größerer Aufwand getrieben werden muß, welcher darüber hinaus in der Handhabung sehr umständlich und zeitaufwendig ist. Darüber hinaus können Fremdgeräusche zu erheblichen Störungen führen.

Die EP 0 780 689 A beschreibt eine Einrichtung, gemäß der in einer Einlernphase das Übersetzungsverhältnis zwischen einem Verbrennungsmotor und einem Generator durch Auswertung eines niederfrequenten Signalanteils der gleichgerichteten Ausgangsspannung des Generators ermittelt wird. Diese Ausgangsspannung des Generators wird zur Vermeidung hochfrequenter Störungen durch ein Bandpaß gefiltert, anschließend verstärkt und analog/digital gewandelt. Das digitalisierte Signal wird dann einer Fouriertransformation unterworfen, womit die aufgrund der Welligkeit auftretenden Signalkomponenten unterschiedlicher Frequenz bestimmt und daraus das Übersetzungsverhältnis berechnet wird. - Wesentlich ist hier, dass ausschließlich die Ausgangsspannung des Generators als Ausgangsgröße dient. Dies kann insbesondere bei der Ermittlung von niedrigen Drehzahlen zu ungenügenden Signalanteilen führen.

Vorteile der Erfindung

Die erfindungsgemäße Einrichtung zur Ermittlung der Drehzahl einer Brennkraftmaschine mit den kennzeichnenden Merkmalen des Anspruchs 1 hat demgegenüber den Vorteil, eine einfache und zuverlässige Lösung zur Verfügung zu stellen, bei welcher die Wahrscheinlichkeit der Detektion der Drehzahl ganz erheblich verbessert ist. Bei einfachster Handhabung und unter Vermeidung von großem Meßaufwand ist eine sehr zuverlässige Drehzahlangabe auch bei hohen Drehzahlen, sowohl bei Diesel- wie bei Otto-Motoren zuverlässig ermöglicht. Die Zündimpulse werden aus dem Bord- oder Batteriestrom ermittelt, der gemäß einer bevorzugten Ausführung auf altbewährte Weise mit einer Strommeß- oder Triggerzange erfaßt wird.

Bei der Einrichtung nach der Erfindung wird dazu prinzipiell zur Bestimmung des Übersetzungsverhältnis zwischen der Frequenz eines Generators, der von der Brennkraftmaschine angetrieben wird, und der Drehzahl der Brennkraftmaschine der signalverarbeitenden Anlage als Eingangsgröße der mit der Zündfrequenz der Brennkraftmaschine pulsierende Bord- oder Batteriestrom zugeführt, um die Drehzahl aus dem Bord- oder Batteriestrom zu ermitteln, wobei diese Ermittlung für die Ermittlung der Leerlaufdrehzahl sowie niedriger Drehzahlen der Brennkraftmaschine angewendet wird.

Durch die in den weiteren Ansprüchen niedergelegten Maßnahmen sind vorteilhafte Weiterbildungen und Verbesserungen der im Anspruch 1 angegebenen Einrichtung möglich.

Nach einer besonders zweckmäßigen Weiterbildung der Erfindung ist vorgesehen, daß der signalverarbeitenden Anordnung die vom Generator und/oder an einer Last erzeugte Bord- oder Batteriespannung als Eingangsgröße zugeführt wird, welche die Generatorfrequenz enthält, um die Drehzahl aus der Generatorfrequenz zu ermitteln. Damit wird eine Einrichtung zur Verfügung gestellt, welche sicher und zuverlässig die Drehzahl über den gesamten Drehzahlbereich einer Brennkraftmaschine zu ermitteln in der Lage ist. Mit Hilfe des aus den beiden auf unterschiedliche Weise ermittelten Drehzahlen gebildeten Verhältniswertes wird kann dann sehr zuverlässig insbesondere bei höheren und hohen Drehzahlen diese überwiegend allein aus dem höherfrequenten Signalanteil berechnet werden.

In vorteilhafter Ausgestaltung der erfindungsgemäßen Einrichtung wird der Bord- oder Batteriestrom mit Hilfe einer Stromzange oder einer Triggerzange erfaßt. Damit ist eine einfache und in der Praxis sehr verbreitete, einfach zu handhabende und sichere Erfassung des Stromes gegeben, der zu den bestimmten Meß- und Prüfzwecken benötigt wird.

In einer weiteren vorteilhaften Ausgestaltung der Erfindung ist vorgesehen, daß der Bord- oder Batteriestrom über eine Signalaufbereitung und gegebenenfalls über einen Komparator der signalverarbeitenden Anordnung zugeführt wird.

In besonders vorteilhafter und zweckmäßiger Weiterbildung der Erfindung wird die als Eingangsgröße verwendete Bord- oder Batteriespannung, welche die Generatorfrequenz enthält, über ein Filter zur Eliminierung der Generatorrestwelligkeit und gegebenenfalls über einen Komparator der signalverarbeitenden Anordnung zugeführt.

Entsprechend einer vorteilhaften Anwendung der erfindungsgemäßen Einrichtung wird die Ermittlung der Drehzahl aus der Generatorfrequenz bevorzugt zur Ermittlung hoher Drehzahlen sowie der Drehzahl oberhalb des Leerlaufs der Brennkraftmaschine verwendet. Die Einrichtung gemäß der Erfindung ist in vorteilhafter Weise zur Drehzahlmessung für Test- und Prüfzwecke sowohl von Otto- als auch von Dieselmotoren in Kraftfahrzeugen vorgesehen.

### Zeichnung

Die Erfindung ist anhand eines in der Zeichnung dargestellten Ausführungsbeispiels in der nachfolgenden Beschreibung näher erläutert. Die einzige Figur zeigt schematisch in einem Blockschaltbild den Aufbau der erfindungsgemäßen Einrichtung zur Ermittlung der Drehzahl gemäß der Erfindung.

### Beschreibung des Ausführungsbeispiels

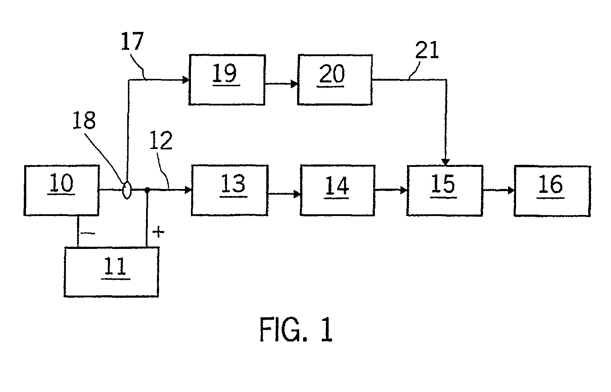

In Fig. 1 ist schematisch in einem Blockschaltbild der Aufbau der erfindungsgemäßen Einrichtung zur Ermittlung der Drehzahl einer Brennkraftmaschine gemäß der Erfindung dargestellt. Die von einem nicht näher dargestellten Generator, der von einer Brennkraftmaschine angetrieben wird, erzeugte Spannung, die in einem Bordnetz 10, beispielsweise einer Kraftfahrzeugelektrik, ansteht und/oder an eine Last wie beispielsweise die Batterie 11 eines Kraftfahrzeuges abgegeben wird, ist mit U_{B} bezeichnet. Diese Spannung U_{B} wird als Eingangsgröße über eine Leitung 12 einem ersten Zweig zugeführt. In diesem ersten Zweig ist ein Filter 13 und ein Komparator 14 vorgesehen, dessen Ausgangssignal einer signalverarbeitenden Anordnung 15 zugeführt wird. Am Ausgang der signalverarbeitenden Anordnung 15 steht die ermittelte Drehzahl an, welche z.B. in einer Anzeige 16 visuell angezeigt werden kann.

Über einen zweiten Zweig, in dem in Serie angeordnet eine Signalaufbereitung 19 und ein Komparator 20 vorgesehen sind, wird über eine Leitung 17 der Bord- oder Batteriestrom I_{B} der signalverarbeitenden Anordnung 15 zugeführt. Der Bord- oder Batteriestrom I_{B} pulsiert mit der Zündfrequenz der Brennkraftmaschine. Er wird entsprechend einer vorteilhaften Ausgestaltung der Erfindung mittels einer Strommeßzange oder einer Triggerzange 18 detektiert und über Leitung 17 der Signalaufbereitung 19 zugeführt. Mittels des Komparators 20 werden nur diejenigen Signalanteile der signalverarbeitenden Anordnung 15 zugeführt, die Information über die Zündimpulse enthalten.

Bei bekannter Zylinderzahl und Art der Brennkraftmaschine, beispielsweise Zwei- oder Viertakt, bestimmt die signalverarbeitende Anordnung 15 aus dem zugeführten Bord- oder Batteriestrom I_{B} die Drehzahl. Dies erfolgt insbesondere für die Ermittlung der Leerlaufdrehzahl und niedriger Drehzahlen. Diese ermittelte Drehzahl wird weiterhin zur Bestimmung des Übersetzungsverhältnisses zwischen der Generatorfrequenz und der Drehzahl der Brennkraftmaschine benutzt. Bei höheren Drehzahlen wird die Drehzahl vorzugsweise über den ersten Zweig aus der Bordoder Batteriespannung U_{B} ermittelt, weil diese in der Generatorrestwelligkeit einen auswertbaren Beitrag enthält, aus der die Generatorfrequenz zu ermitteln ist.

Das im ersten Zweig enthaltene Filter 13 begrenzt die dem Komparator 14 zugeführten Signalanteile der Spannung U_{B} auf diejenigen Werte, welche für die Auswertung in Frage kommen und einen relevanten Beitrag leisten. Der Komparator 14 vergleicht diese vom Filter 13 gelieferten Signalwerte mit vorgegebenen oberen und unteren Grenzwerten, um das der signalverarbeitenden Anordnung 15 zugeführte Signal dieser möglichst verarbeitungsgerecht zuzuführen. Diese bestimmt daraus unter zu Hilfenahme des ermittelten Übersetzungsverhältnisses zwischen der Generatorfrequenz und der Drehzahl der Brennkraftmaschine deren Drehzahl, welche auf der Anzeige 16 angezeigt wird. Diese Vorgehensweise ist hauptsächlich für mittlere und höhere Drehzahlen zuständig.

Die erfindungsgemäße Einrichtung ist bevorzugt zur Drehzahlmessung für Test- und Prüfzwecke sowohl von Otto- als auch von Dieselmotoren in Kraftfahrzeugen vorgesehen.

Mit der Erfindung ist in vorteilhafter Weise eine Einrichtung zur Verfügung gestellt, die leicht am Fahrzeug adaptierbar ist. Mit ihrer Hilfe kann zuverlässig sowohl bei Ottomotoren als auch bei Dieselmotoren die Drehzahl gemessen werden. Die Einrichtung ist gegen Störeinflüsse auf dem Bordnetz erheblich unempfindlicher als bekannte Einrichtungen, da über die Strommeßzange eine altbewährte einfache Adaption möglich ist, welche ganz erheblich zur Detektionssicherheit der Drehzahl beiträgt. Dies ist für die Praxis ein ganz wesentlicher Aspekt.

## Patentansprüche

1. Einrichtung zur Bestimmung der Drehzahl einer Brennkraftmaschine, welche aus einem von der Brennkraftmaschine erzeugten Signal, bei bekannter Zylinderzahl der Brennkraftmaschine, die Drehzahl der Brennkraftmaschine durch Auswertung in einer signalverarbeitenden Anlage (15) ermittelt,
**dadurch gekennzeichnet, daß**
zur Bestimmung des Übersetzungsverhältnis zwischen der Frequenz eines Generators, der von der Brennkraftmaschine angetrieben wird, und der Drehzahl der Brennkraftmaschine der signalverarbeitenden Anlage (15) als Eingangsgröße der mit der Zündfrequenz der Brennkraftmaschine pulsierende Bord- oder Batteriestrom (I_{B}) zugeführt wird, um die Drehzahl aus dem Bord- oder Batteriestrom (I_{B}) zu ermitteln, wobei diese Ermittlung für die Ermittlung der Leerlaufdrehzahl sowie niedriger Drehzahlen der Brennkraftmaschine angewendet wird.

2. Einrichtung nach Anspruch 1, **dadurch gekennzeichnet, daß** der signalverarbeitenden Anordnung (15) die vom Generator und/oder an einer Last (11) erzeugte Bord- oder Batteriespannung (U_{B}) als Eingangsgröße zugeführt wird, welche die Generatorfrequenz enthält, um die Drehzahl aus der Generatorfrequenz zu ermitteln.

3. Einrichtung nach einem der vorigen Ansprüche, **dadurch gekennzeichnet, daß** der Bord- oder Batteriestrom (I_{B}) mit Hilfe einer Strommeßzange oder einer Triggerzange (18) erfaßt wird.

4. Einrichtung nach einem der vorigen Ansprüche, **dadurch gekennzeichnet, daß** der Bord- oder Batteriestrom (I_{B}) über eine Signalaufbereitung (19) und gegebenenfalls über einen Komparator (20) der signalverarbeitenden Anordnung (15) zugeführt wird.

5. Einrichtung nach einem der Ansprüche 2 bis 4, **dadurch gekennzeichnet, daß** die als Eingangsgröße verwendete Bordoder Batteriespannung (U_{B}), welche die Generatorfrequenz enthält, über ein Filter (13) zur Eliminierung der Generatorrestwelligkeit und gegebenenfalls über einen Komparator (14) der signalverarbeitenden Anordnung (15) zugeführt wird.

6. Einrichtung nach einem der Ansprüche 2 bis 4, **dadurch gekennzeichnet, daß** sie zur bevorzugten Ermittlung hoher Drehzahlen sowie der Drehzahl oberhalb des Leerlaufs der Brennkraftmaschine verwendet wird.

7. Einrichtung nach einem der vorigen Ansprüche, **dadurch gekennzeichnet, daß** sie zur Drehzahlmessung für Test- und Prüfzwecke sowohl von Otto- als auch von Dieselmotoren in Kraftfahrzeugen vorgesehen ist.

## Claims

1. Device for determining the rotational speed of an internal combustion engine which determines the rotational speed of the internal combustion engine from a signal generated by the internal combustion engine, by means of evaluation in a signal-processing system (15) given a known number of cylinders of the internal combustion engine, **characterized in that**, in order to determine the transmission ratio between the frequency of a generator which is driven by the internal combustion engine and the rotational speed of the internal combustion engine, the vehicle's electrical system current or battery current (I_{B}) which pulsates at the ignition frequency of the internal combustion engine is fed as input variable to the signal-processing system (15) in order to determine the rotational speed from the vehicle's electrical system current or battery current (I_{B}), this determination being used to determine the idling speed and low rotational speeds of the internal combustion engine.

2. Device according to Claim 1, **characterized in that** the vehicle's electrical system voltage or battery voltage (U_{B}) which is generated by the generator and/or at a load (11) is fed, as input variable, to the signal-processing arrangement (15), said input variable containing the generator frequency in order to determine the rotational speed from the generator frequency.

3. Device according to one of the preceding claims, **characterized in that** the vehicle's electrical system current or battery current (I_{B}) is sensed using a current measuring clamp meter or a trigger-type clip-on instrument (18).

4. Device according to one of the preceding claims, **characterized in that** the vehicle's electrical system current or battery current (I_{B}) is fed to the signal-processing arrangement (15) via a signal-conditioning device (19) and, if appropriate, via a comparator (20).

5. Device according to one of Claims 2 to 4, **characterized in that** the vehicle's electrical system voltage or battery voltage (U_{B}) which is used as input variable and which contains the generator frequency is fed to the signal-processing arrangement (15) via a filter (13) for eliminating the residual ripple of the generator and, if appropriate, via a comparator (14).

6. Device according to one of Claims 2 to 4, **characterized in that** it is used for preferably determining high rotational speeds and the rotational speed above the idling speed of the internal combustion engine.

7. Device according to one of the preceding claims, **characterized in that** it is provided for measuring the rotational speed for testing and checking purposes of both spark ignition engines and diesel engines in motor vehicles.

## Revendications

1. Installation pour déterminer la vitesse de rotation d'un moteur à combustion interne, qui établit la vitesse de rotation du moteur à combustion interne à partir d'un signal produit par le moteur à combustion interne, lorsque le nombre de cylindres du moteur à combustion interne est connu, par une exploitation dans un équipement (15) qui traite les signaux,
**caractérisée en ce que**
pour déterminer le rapport de transmission entre la fréquence d'un générateur qui est entraîné par le moteur à combustion interne et la vitesse de rotation du moteur à combustion interne, le courant de bord ou de batterie (I_{B}) ondulé avec la fréquence d'allumage du moteur à combustion interne est conduit à l'équipement (15) de traitement des signaux en tant que grandeur d'entrée afin d'établir la vitesse de rotation à partir du courant de bord ou de batterie (I_{B}), cet établissement étant utilisé pour établir la vitesse de rotation à vide ainsi que les faibles vitesses de rotation du moteur à combustion interne.

2. Installation selon la revendication 1,
**caractérisée en ce qu'**
en tant que grandeur d'entrée fournie à l'équipement (15) de traitement des signaux on conduit la tension de bord ou de batterie (U_{B}) produite par le générateur et/ou sur une charge (11) et qui contient la fréquence du générateur, afin d'établir la vitesse de rotation à partir de la fréquence du générateur.

3. Installation selon l'une des revendications précédentes,
**caractérisée en ce que**
le courant de bord ou de batterie (I_{B}) est saisi à l'aide d'une pince ampèremétique ou d'une pince d'amorçage (18).

4. Installation selon l'une des revendications précédentes,
**caractérisée en ce que**
le courant de bord ou de batterie (I_{B}) est conduit à l'équipement (15) de traitement des signaux par l'intermédiaire d'une régénération du signal (19) et éventuellement d'un comparateur (20).

5. Installation selon l'une des revendications 2 à 4,
**caractérisée en ce que**
la tension de bord ou de batterie (U_{B}), utilisée en tant que grandeur d'entrée, qui contient la fréquence du générateur est conduite à l'équipement (15) de traitement des signaux par l'intermédiaire d'un filtre (13) pour éliminer l'ondulation résiduelle du générateur, et éventuellement par l'intermédiaire d'un comparateur (14).

6. Installation selon l'une des revendications 2 à 4,
**caractérisée en ce qu'**
elle est utilisée pour établir de façon recommandée notamment des vitesses de rotation élevées ainsi que la vitesse de rotation au-dessus du fonctionnement au ralenti du moteur à combustion interne.

7. Installation selon l'une des revendications précédentes,
**caractérisée en ce qu'**
elle est prévue dans des véhicules automobiles pour mesurer la vitesse de rotation à des fins d'essais ou de contrôle aussi bien pour des moteurs à étincelles que pour des moteurs Diesel.
